# EUROPÄISCHE PATENTANMELDUNG

(11) **EP 3 524 549 A1**
(43) Veröffentlichungstag der Anmeldung: **14.08.2019**
(21) Anmeldenummer: 19153637.4
(22) Anmeldetag: 25.01.2019
(51) Int. Cl.: B65G 47/72, B65G 11/02, B65G 11/08, B65D 88/26, B65G 47/44, B65G 11/20

(54) **SCHÜTTGUTTRICHTER UND SCHÜTTGUT-BESCHICKUNGSANLAGE MIT EINEM SCHÜTTGUTTRICHTER**

(30) Priorität: 08.02.2018 DE 102018202012
(71) Anmelder: Benninghoven GmbH & Co. KG, 54516 Wittlich (DE)
(72) Erfinder: Licht, Ramón, 54516 Wittlich (DE)
(74) Vertreter: Rau, Schneck & Hübner Patentanwälte Rechtsanwälte PartGmbB

(57) **Zusammenfassung**

Ein Schüttguttrichter (5) für eine Schüttgut-Beschickungsanlage (1) weist ein einen Innenraum (10) begrenzendes Gehäuse (11) mit einer Eintrittsöffnung (12) und einer Austrittsöffnung (13) für ein Schüttgut auf. Die Austrittsöffnung (13) ist von der Eintrittsöffnung (12) in einer Förderrichtung (14) beabstandet. Ein senkrecht zu der Förderrichtung (14) definierter Querschnitt (17) des Innenraums (10) hat eine Haupterstreckung (18) senkrecht zu der Förderrichtung (14), wobei sich eine Orientierung der Haupterstreckung (18) in Abhängigkeit von einer Position entlang der Förderrichtung (14) ändert.

## Beschreibung

Die Erfindung betrifft einen Schüttguttrichter für eine Schüttgut-Beschickungsanlage und eine Schüttgut-Beschickungsanlage mit einem derartigen Schüttguttrichter.

Schüttguttrichter zur Förderung von Schüttgut sind bekannt. Schüttgut kann über eine Eintrittsöffnung des Schüttguttrichters, welcher zumeist einen großen Querschnitt aufweist, einfach und verlustfrei eingebracht werden. Der Schüttguttrichter verringert seinen Querschnitt, sodass ein gezieltes Ausbringen des Schüttguts über eine Austrittsöffnung des Schüttguttrichters möglich ist. Schüttguttrichter finden insbesondere in Schüttgut-Beschickungsanlagen Anwendung.

Es ist eine Aufgabe der vorliegenden Erfindung, einen Schüttguttrichter zu verbessern, insbesondere einen Schüttguttrichter bereitzustellen, der eine Segregation des Schüttguts vermeidet oder zumindest vermindert.

Diese Aufgabe wird gelöst durch einen Schüttguttrichter mit den in Anspruch 1 angegebenen Merkmalen. Der Schüttguttrichter weist ein einen Innenraum begrenzendes Gehäuse mit einer Eintrittsöffnung für das Schüttgut und einer Austrittsöffnung für das Schüttgut auf. Die Austrittsöffnung für das Schüttgut ist entlang einer Förderrichtung von der Eintrittsöffnung beabstandet.

Der Kern der Erfindung besteht darin, dass ein senkrecht zu der Förderrichtung definierter Querschnitt des Innenraums eine Haupterstreckung senkrecht zu der Förderrichtung aufweist, wobei sich eine Orientierung der Haupterstreckung in Abhängigkeit von einer Position entlang der Förderrichtung ändert. Durch die Änderung der Orientierung der Haupterstreckung wird ein in den Schüttguttrichter strömender Schüttgutstrom umgelenkt, insbesondere gekreuzt. Dies bewirkt ein Durchmischen des Schüttguts und vermindert dessen Segregation.

Das Schüttgut verlässt den Schüttguttrichter, insbesondere selbstständig schwerkraftbedingt, durch die Austrittsöffnung. Insbesondere fällt das Schüttgut als linienförmige Strömung entlang der Haupterstreckung aus dem Schüttguttrichter. Das Schüttgut wird als linienförmige Strömung mit der Haupterstreckung entlang der Förderrichtung durch den Schüttguttrichter gefördert. Linienförmig bedeutet, dass bei einem kontinuierlichen Schüttgutstrom entlang der Förderrichtung durch den Schüttguttrichter in einer virtuellen Schnittebene senkrecht zur Förderrichtung der Schüttgutstrom linienförmig ausgeführt ist. Linienförmig bedeutet, dass die Querschnittsfläche des Schüttgutstroms eine Länge entlang der Haupterstreckung aufweist, die größer ist als eine dazu senkrecht orientierte Breite der Querschnittsfläche. Insbesondere ist die Länge mindestens fünfmal so groß, insbesondere mindestens zehnmal so groß und insbesondere mindestens zwanzigmal so groß wie die Breite der Querschnittsfläche der Schüttgutströmung.

Als Schüttgut dient beispielsweise eine Mischung aus Asphaltkörnungen und/oder Gesteinskörnungen. Das Schüttgut ist insbesondere eine Mischung aus partikelförmigem Material.

Die Förderrichtung ist als die kürzeste Verbindung zwischen Eintrittsöffnung und Austrittsöffnung definiert. Sie steht insbesondere senkrecht auf der Eintrittsöffnung. Die Förderrichtung weist bevorzugt eine Erstreckung in entlang Schwerkraftrichtung auf, sodass das Schüttgut rein passiv aufgrund der Schwerkraft entlang der Förderrichtung strömen kann. Besonders bevorzugt verläuft die Förderrichtung parallel zu der Schwerkraftrichtung.

Die Eintrittsöffnung und die Austrittsöffnung sind Teil des Innenraums. Der senkrecht zu der Förderrichtung definierte Querschnitt des Innenraums kann sich entlang der Förderrichtung von der Eintrittsöffnung hin zu der Austrittsöffnung verjüngen. Mit anderen Worten, die Fläche des Querschnitts kann sich entlang der Förderrichtung, das heißt abhängig von der Position entlang der Förderrichtung, verringern. Die Verringerung der Querschnittsfläche kann insbesondere kontinuierlich erfolgen. Die maximale Fläche des Querschnitts des Innenraums kann beispielsweise der Eintrittsöffnung entsprechen. Die minimale Fläche des Querschnitts kann beispielsweise der Austrittsöffnung entsprechen.

Der senkrecht zu der Förderrichtung definierte Querschnitt des Innenraums weist eine Haupterstreckung auf. Auch die Eintrittsöffnung und die Austrittsöffnung, die Teil des Innenraums sind, weisen eine Haupterstreckung auf. Für den Fall einer beliebigen Querschnittskontur kann die Haupterstreckung als eine Achse, um welche der Querschnitt das kleinste Flächendrehmoment aufweist, definiert werden. Die Haupterstreckung entspricht im Allgemeinen der Achse entlang der größten Ausdehnung des Querschnitts. Für einen im Wesentlichen ellipsenförmigen Querschnitt entspricht die Haupterstreckung der großen Halbachse der Ellipse. Für einen im Wesentlichen rechteckigen Querschnitt entspricht die Haupterstreckung der Längsachse des Rechtecks.

Die Orientierung der Haupterstreckung ist definiert als die Richtung, in der die Haupterstreckung verläuft. Die Orientierung der Haupterstreckung ist daher immer senkrecht zu der Förderrichtung. Die Änderung der Orientierung kann beispielsweise durch eine Drehung der Haupterstreckung um eine zur Förderrichtung parallele Achse beschrieben werden. Die Änderung der Orientierung kann kontinuierlich oder sprunghaft erfolgen.

Gemäß einem Aspekt der Erfindung dreht sich die Orientierung der Haupterstreckung des Querschnitts entlang der Förderrichtung um mindestens 30°. Da die Orientierung der Haupterstreckung senkrecht zu der Förderrichtung ist, erfolgt die Drehung um eine zur Förderrichtung parallele Achse. Dies bewirkt eine effektive Kreuzung des Schüttgutstroms. Bevorzugt dreht sich die Orientierung der Haupterstreckung des Querschnitts entlang der Förderrichtung im mindestens 45°, insbesondere um mindestens 60°, insbesondere um mindestens 75°, insbesondere um mindestens 85°. Je größer die Änderung der Orientierung, d.h. je größer der Drehwinkel, ist, desto effektiver ist die Kreuzung und Durchmischung des Schüttguts. Hierdurch kann die Segregation des Schüttguts zuverlässig vermieden werden. Insbesondere ist auch möglich, dass sich die Orientierung der Haupterstreckung um mehr als 90° ändert. Beispielsweise ist ein mehrmaliges Drehen der Orientierung der Haupterstreckung um eine zu der Förderrichtung parallele Achse möglich.

Besonders bevorzugt dreht sich die Orientierung der Haupterstreckung des Querschnitts entlang der Förderrichtung um etwa 90°. Eine Änderung um etwa 90° ermöglicht eine effektive Kreuzung des Schüttgutstroms, sodass die Segregation zuverlässig vermieden ist. Gleichzeitig ist ein kompakter Aufbau des Schüttguttrichters möglich.

Gemäß einem weiteren Aspekt der Erfindung weist eine Orientierung einer Haupterstreckung der Eintrittsöffnung zu einer Orientierung einer Haupterstreckung der Austrittsöffnung einen Winkel zwischen 80° und 100°, bevorzugt von etwa 90°, auf. Hierdurch ist gewährleistet, dass sich die Orientierung der Haupterstreckung des Querschnitts entlang der Förderrichtung um mindestens 90° ändert. Zudem kann die gesamte Ausdehnung des Schüttguttrichters in Förderrichtung für die Änderung der Orientierung der Haupterstreckung des Querschnitts des Innenraums genutzt werden. Dies ermöglicht eine besonders kompakte Bauweise des Schüttguttrichters, ohne dass die Kreuzung des Schüttguts beeinträchtigt ist.

Gemäß einem weiteren Aspekt der Erfindung weist die Eintrittsöffnung und/oder die Austrittsöffnung einen im Wesentlichen rechteckigen Querschnitt auf. Ein im Wesentlichen rechteckiger Querschnitt bedeutet hierbei, dass beispielsweise die Ecken abgerundet oder abgeflacht sein können. Auch können die Rechteckskanten gebogen verlaufen. Ein im Wesentlichen rechteckiger Querschnitt entspricht einer gängigen Querschnittskontur, die mit bekannten Schurren kompatibel ist. Der Schüttguttrichter ist in bekannten Schüttgut-Beschickungsanlagen nachrüstbar.

Besonders bevorzugt sind sowohl die Eintrittsöffnung und die Austrittsöffnung als auch der Querschnitt des Innenraums entlang der gesamten Förderrichtung im Wesentlichen rechtecksförmig. Die Haupterstreckung des rechteckigen Querschnitts verläuft jeweils entlang einer Längskante des rechteckigen Querschnitts. Auf diese Weise kann eine effektive und einfache Veränderung der Hauptachsen gewährleistet werden, indem die Ausdehnung des Querschnitts entlang der Orientierung der Haupterstreckung des Einlasses verringert wird.

Gemäß einem weiteren Aspekt der Erfindung ist eine entlang einer Längsrichtung des Schüttguttrichters gemessene Länge der Eintrittsöffnung mindestens um den Faktor 1,5 länger als eine in einer Querrichtung des Schüttguttrichters gemessene Breite der Eintrittsöffnung. Bevorzugt ist die entlang der Längsrichtung des Schüttguttrichters gemessene Länge der Eintrittsöffnung mindestens um den Faktor 2 länger als die in der Querrichtung gemessene Breite der Eintrittsöffnung. Die Längsrichtung des Schüttguttrichters ist entlang einer Orientierung der Haupterstreckung der Eintrittsöffnung definiert. Die Querrichtung des Schüttguttrichters steht senkrecht zu der Längsrichtung und senkrecht zu der Förderrichtung. Durch das vorgesehene Verhältnis von Länge zu Breite der Eintrittsöffnung ist die maximale Fläche des Querschnitts, der für den Schüttgutstrom zur Verfügung steht, zum großen Teil durch die Ausdehnung entlang der Haupterstreckung, d.h. die Länge, bestimmt. Die Haupterstreckung ist stark ausgeprägt. Eine Änderung der Orientierung der Haupterstreckung hat somit einen starken Einfluss auf den Schüttgutstrom. Dies führt zu einem verbesserten Durchmischen und vermeidet die Segregation des Schüttguts besonders zuverlässig.

Besonders bevorzugt weist die Austrittsöffnung eine Breite entlang der Querrichtung des Schüttguttrichters auf, die gegenüber einer Länge der Austrittsöffnung entlang der Längsrichtung des Schüttguttrichters mindestens um den Faktor 1,5 größer ist. Das für die Eintrittsöffnung charakteristische Längenverhältnis findet sich auch bei der Austrittsöffnung. Hierdurch ist ein Umlenken und Kreuzen des Schüttgutstroms durch die Änderung der Orientierung besonders effektiv.

Gemäß einem weiteren Aspekt der Erfindung variiert eine Breite des Querschnitts des Innenraums in der Querrichtung entlang der Förderrichtung höchstens um 10%. Insbesondere variiert die Breite des Querschnitts entlang der Förderrichtung höchstens um 5%. Bevorzugt ist die Breite des Querschnitts im Wesentlichen konstant. Eine nur gering variierende Breite des Querschnitts entlang der Förderrichtung bewirkt, dass die Verjüngung des Querschnitts hauptsächlich durch eine Verringerung dessen Längsausdehnung entlang der Längsrichtung erfolgt. Die Verringerung der Ausdehnung entlang nur einer der Richtungen, nämlich einer Länge des Querschnitts entlang der Längsrichtung, bewirkt auf konstruktiv einfache und effektive Weise eine Änderung der Orientierung der Haupterstreckung. So kann sich die Orientierung beispielsweise an einer Position entlang der Längsrichtung ändern, an welcher die Länge des Querschnitts entlang der Längsrichtung die Breite entlang der Querrichtung unterschreitet. Dies bewirkt eine sprunghafte Änderung der Orientierung. Die sprunghafte Änderung der Orientierung der Haupterstreckung bewirkt ein abruptes Umlenken des strömenden Schüttguts und gewährleistet eine effektive Kreuzung der Schüttgutströme.

Zudem hat das Vorsehen einer sich nur geringfügig ändernden Breite den Vorteil, dass eine Mindestfläche des Querschnitts des Innenraums durch die Breite festgelegt ist. Die Drehung der Orientierung der Haupterstreckung ist somit gewährleistet, ohne dass die Fläche des Querschnitts übermäßig verringert wird.

Die die Länge begrenzenden Gehäusewände, insbesondere parallel zur Querrichtung verlaufenden Strinwände des Gehäuses, können eine Prallfläche bilden, über die der Schüttgutstrom umgelenkt und gesteuert wird.

Gemäß einem weiteren Aspekt der Erfindung ist ein Flächenschwerpunkt der Eintrittsöffnung gegenüber einem Flächenschwerpunkt der Austrittsöffnung senkrecht zu der Förderrichtung verschoben. Der Flächenschwerpunkt kann bevorzugt in Längsrichtung des Schüttguttrichters verschoben sein, insbesondere um mindestens 5 % der Länge der Eintrittsöffnung, bevorzugt um mindestens 10 % der Länge der Eintrittsöffnung. Der verschobene Flächenschwerpunkt führt zu einer asymmetrischen Führung des Schüttgutstroms zwischen der Eintrittsöffnung und der Austrittsöffnung. Insbesondere können die die Länge begrenzenden Prallflächen bezüglich der Längsrichtung zumindest bereichsweise asymmetrisch angeordnet sein. Eine derartige asymmetrische Führung des Schüttgutstroms führt zu einem zuverlässigen Vermischen des Schüttguts. Die Segregation des Schüttguts ist konsequent vermieden.

Gemäß einem weiteren Aspekt der Erfindung weist das Gehäuse einen sich in Förderrichtung zur Austrittsöffnung hin erstreckenden Austrittsabschnitt auf. Der Austrittsabschnitt hat in einer entlang der Förderrichtung definierten Schrittebene die Form eines sich in Förderrichtung verjüngenden unregelmäßigen Trapezes. Zumindest im Bereich des Austrittsabschnitts weist der Schüttguttrichter daher eine asymmetrische Konstruktion auf, die ein Vermischen des Schüttguts beim Umlenken des Schüttgutstroms gewährleistet. Die Form des Austrittsabschnitts kann zudem auf einfache Weise eine Verschiebung des Flächenschwerpunkts der Austrittsöffnung bezüglich der Eintrittsöffnung bewirken. Der Austrittsabschnitt kann in der Schnittebene insbesondere die Form eines rechtwinkligen Trapezes aufweisen.

Bevorzugt wird die Schnittebene durch die Förderrichtung und die Längsrichtung aufgespannt. Besonders bevorzugt erstreckt sich der Austrittsabschnitt über 50% der Ausdehnung des Schüttguttrichters in der Förderrichtung. Die Asymmetrie des Austrittsabschnitts beeinflusst hierdurch die Geometrie des Schüttguttrichters maßgeblich. Dies verstärkt die Wirkung des Austrittsabschnitts beim Kreuzen der Schüttgutströme.

Zusätzlich zu dem Austrittsabschnitt kann ein Eintrittsabschnitt vorgesehen sein. Der Eintrittsabschnitt kann sich von der Eintrittsöffnung entlang der Förderrichtung zum Austrittsabschnitt hin erstrecken. Insbesondere hat der Eintrittsabschnitt in der Schnittebene die Form eines regelmäßigen, sich in Richtung des Austrittsabschnitts verjüngenden Trapezes. Im Gegensatz zu dem Austrittsabschnitt kann der Eintrittsabschnitt daher bezogen auf die Schnittebene, insbesondere auf die Längsrichtung eine symmetrische Geometrie aufweisen. In diesem Fall wird die Symmetrie am Übergang zum Austrittsabschnitt gebrochen. Dieser Symmetriebruch wird zu einem abrupten Umlenken zumindest eines Teils des Schüttgutstroms, sodass die Durchmischung des Schüttguts weiter verbessert ist.

Gemäß einem weiteren Aspekt der Erfindung weist das Gehäuse entlang von dem Innenraum zugewandten Kanten zumindest bereichsweise Eckleisten auf. Die Eckleisten verhindern ein Anbacken von Schüttgut, insbesondere entlang der Kanten des Gehäuses. Bevorzugt sind die Eckleisten gegenüber Wandflächen des Gehäuses, welche an den Kanten zusammentreffen, um 45° angestellt. Die Eckleisten und/oder das Gehäuse können aus einem verschleißfesten Material sein. Das Material kann an das jeweilige durch den Schüttguttrichter zu fördernde Schüttgut angepasst sein. Hierdurch ist ein Verschleiß des Gehäuses durch das Schüttgut vermindert.

Es ist eine weitere Aufgabe der Erfindung, eine Schüttgut-Beschickungsanlage zu verbessern.

Diese Aufgabe wird gelöst durch eine Schüttgut-Beschickungsanlage mit den in Anspruch 10 genannten Merkmalen. Die Schüttgut-Beschickungsanlage umfasst einen Schüttguttrichter mit den oben beschriebenen Merkmalen. Die Vorteile der Schüttgut-Beschickungsanlage ergeben sich aus den Vorteilen des Schüttguttrichters.

Des Weiteren kann die Schüttgut-Beschickungsanlage eine Schüttgutweiche umfassen. Durch die Schüttgut-Beschickungsanlage sind verschiedene Beschickungs-Ziele, wie beispielsweise Silos, mit Schüttgut beschickbar.

Weitere Merkmale und Vorteile der Erfindung werden anhand des nachfolgenden Ausführungsbeispiels und den zugehörigen Figuren beschrieben. Die Figuren zeigen:
- Fig. 1: eine perspektivische Ansicht einer Schüttgut-Beschickungsanlage mit einem Schüttguttrichter und einer Schüttgutweiche, wobei zwei Schüttgutrutschen der Schüttgutweiche jeweils in ihrer Passivstellung dargestellt sind,
- Fig. 2: ein Längsschnitt durch die Schüttgut-Beschickungsanlage gemäß Fig. 1,
- Fig. 3: ein Längsschnitt durch die Schüttgut-Beschickungsanlage gemäß Fig. 1, wobei eine der zwei Schüttgutrutschen in ihrer Aktivstellung gezeigt ist,
- Fig. 4: ein Längsschnitt durch die Schüttgut-Beschickungsanlage gemäß Fig. 1, wobei die andere der zwei Schüttgutrutschen der Schüttgutweiche in ihrer Aktivstellung gezeigt ist, und
- Fig. 5: eine Aufsicht auf die Schüttgutweiche gemäß Fig. 1, wobei die Stellung der Schüttgutrutschen der der Fig. 4 entspricht.

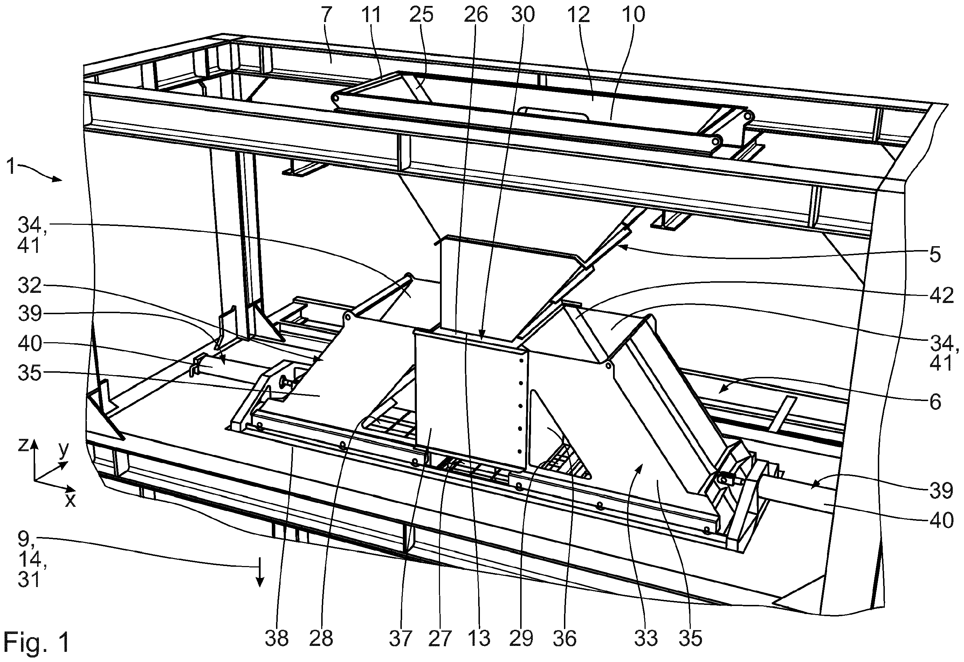

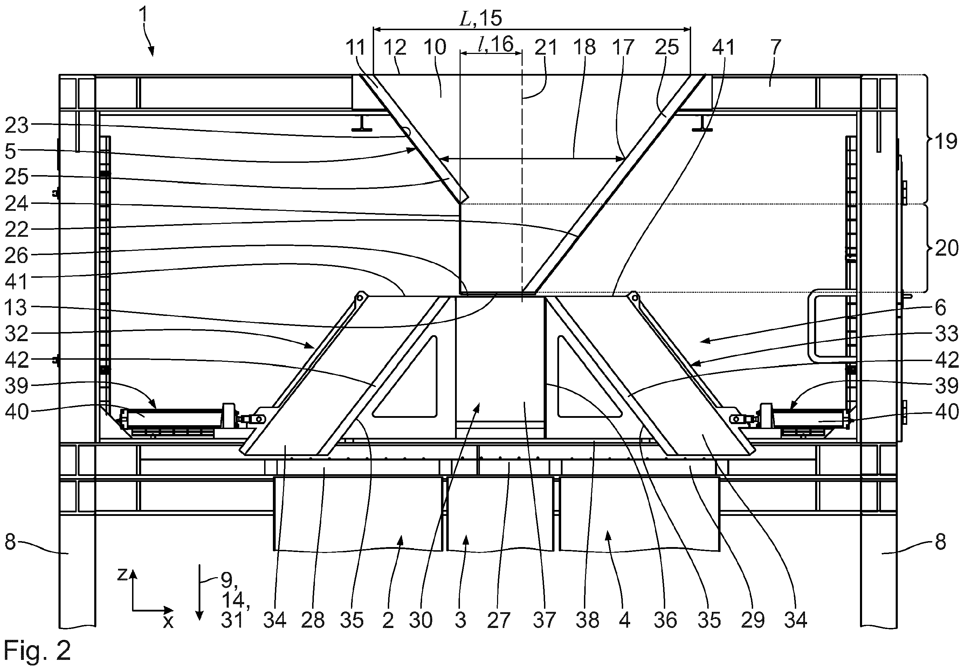

In den Fig. 1 bis 5 ist ein Ausführungsbeispiel einer Schüttgut-Beschickungsanlage 1 gezeigt. Die Schüttgut-Beschickungsanlage 1 dient zum Abfüllen von Schüttgut in drei Schüttgut-Container 2, 3, 4, die schematisch in den Fig. 2 bis 4 angedeutet sind. Bei den Schüttgut-Containern 2, 3, 4 handelt es sich um Silos. In weiteren Ausführungsbeispielen können dies auch andere Schüttgut-Container, wie beispielsweise auf LKW montierte Betonmischer, sein.

Zur Aufnahme eines abzufüllenden Schüttguts weist die Schüttgut-Beschickungsanlage einen Schüttguttrichter 5 auf. Der Schüttguttrichter 5 leitet das Schüttgut an eine Schüttgutweiche 6 weiter, die das Schüttgut auf die Schüttgut-Container 2, 3, 4 verteilt. Der Schüttguttrichter 5 und die Schüttgutweiche 6 sind in einem Rahmen 7 angeordnet. Der Rahmen 7 weist Füße 8 auf, sodass die Schüttgut-Beschickungsanlage 1 in Bezug auf eine Schwerkraftrichtung 9 oberhalb der Schüttgut-Container 2, 3, 4 angeordnet ist. Das Schüttgut wird in der Schüttgut-Beschickungsanlage 1 daher rein aufgrund der in der Schwerkraftrichtung 9 wirkenden Schwerkraft in die Schüttgut-Container 2, 3, 4 gefördert. Aktive Fördermechanismen sind daher nicht nötig. Eine Verkleidung der Schüttgut-Beschickungsanlage 1, welche am Rahmen 7 angeordnet ist, ist in den Fig. 1 bis 5 aus Gründen der Übersichtlichkeit nicht dargestellt.

Zur Beschreibung der Komponenten der Schüttgut-Beschickungsanlage 1 wird im Folgenden das in den Figuren dargestellte orthogonale Koordinatensystem aus x-, y- und z-Achse verwendet. Die Schüttgut-Beschickungsanlage 1 weist eine Länge in Richtung der x-Achse, eine Tiefe in Richtung der y-Achse und eine Höhe in Richtung der z-Achse auf. Die Schwerkraftrichtung 9 verläuft parallel zu der z-Achse.

Im Folgenden wird der Schüttguttrichters 5 und dessen Funktionsweise im Detail beschrieben. Der Schüttguttrichter 5 weist ein einen Innenraum 10 begrenzendes Gehäuse 11 auf. Das Gehäuse 11 weist eine Eintrittsöffnung 12 für das Schüttgut und eine Austrittsöffnung 13 für das Schüttgut auf. Die Eintrittsöffnung 12 und die Austrittsöffnung 13 sind Teil des Innenraums 10. Die Eintrittsöffnung 12 ist in Richtung der z-Achse am oberen Ende des Schüttguttrichters 5 ausgeführt. Die Austrittsöffnung 13 liegt der Eintrittsöffnung 12 am unteren Ende des Schüttguttrichters 5 gegenüber. Die Eintrittsöffnung 12 und die Austrittsöffnung 13 sind parallel zueinander und parallel zu einer die x-Achse und die y-Achse aufgespannte Ebene. Die Eintrittsöffnung 12 ist über den Innenraum 10 in einer Förderrichtung 14 mit der Austrittsöffnung 13 verbunden. Die Förderrichtung 14 steht auf den Querschnittsflächen der Eintrittsöffnung 12 und der Austrittsöffnung 13 senkrecht. Die Förderrichtung 14 verläuft entlang der Schwerkraftrichtung 9 und stellt die kürzeste Verbindung zwischen der Eintrittsöffnung 12 und der Austrittsöffnung 13 dar.

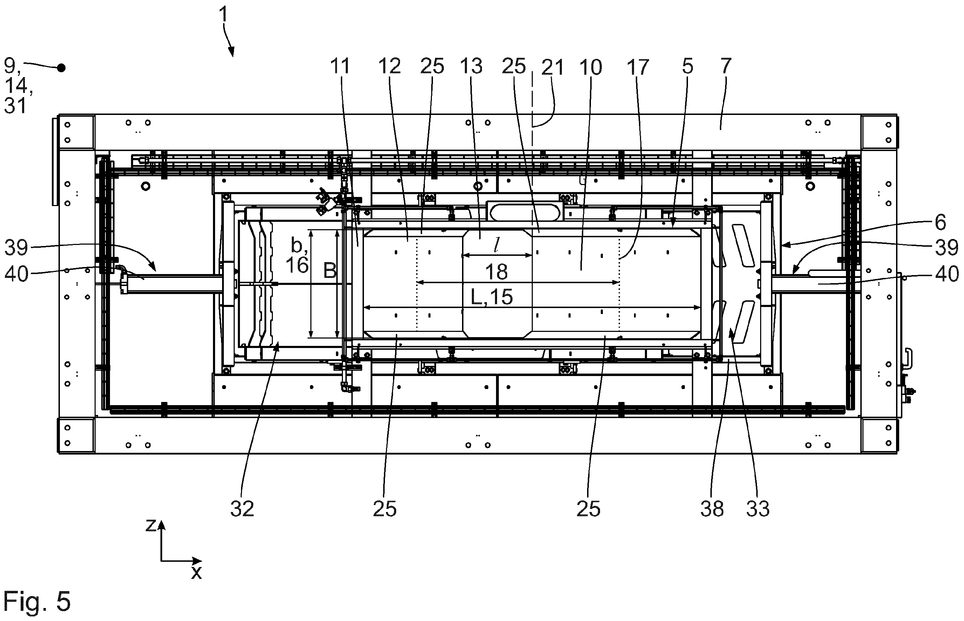

Wie insbesondere in Fig. 5 zu sehen ist, ist die Eintrittsöffnung 12 im Wesentlichen rechteckig. Die Eintrittsöffnung 12 weist in Richtung der x-Achse eine Länge L und in Richtung der y-Achse eine Breite B auf. Die x-Achse stellt daher eine Längsrichtung x des Schüttguttrichters 5 dar. Die y-Achse ist eine Querrichtung y des Schüttguttrichters 5. Die Länge L der Eintrittsöffnung 12 ist um mehr als den Faktor 2 länger als deren in Querrichtung y gemessene Breite B. Die Eintrittsöffnung 12 weist daher eine ausgeprägte Haupterstreckung 15 auf, deren Orientierung parallel zur Längsrichtung x ist.

Auch die Austrittsöffnung 13 ist im Wesentlichen rechteckig. Die Austrittsöffnung 13 weist eine Länge 1 in Längsrichtung x und eine Breite b in Querrichtung y auf. Die Breite b der Austrittsöffnung 13 übersteigt deren Länge 1 mindestens um den Faktor 1,5. Auch die Austrittsöffnung 13 weist daher eine ausgeprägte Haupterstreckung 16 auf, deren Orientierung parallel zur Querrichtung y ist. Die Orientierung der Haupterstreckung 15 der Eintrittsöffnung 12 weist zu der Orientierung der Haupterstreckung 16 der Austrittsöffnung 13 daher einen Winkel von 90° auf. Mit anderen Worten, die Orientierung der Haupterstreckung 15 der Eintrittsöffnung 12 steht senkrecht auf der Orientierung der Haupterstreckung 16 der Austrittsöffnung 13.

Der Innenraum 10 des Schüttguttrichters 5 weist einen senkrecht zu der Förderrichtung 14 definierten Querschnitt 17 auf. In den Figuren ist der Querschnitt 17 des Innenraums 10 auf einer bestimmten Höhe des Schüttguttrichters 5, also an einer bestimmten Position entlang der Förderrichtung 14 eingezeichnet. Ein beispielhafter Querschnitt 17 ist in Fig. 5 gestrichelt angedeutet. Der Querschnitt 17 ist jedoch für alle Positionen entlang der Förderrichtung 14 über die Höhe des Schüttguttrichters 5 definiert. Eine Fläche des Querschnitts 17 des Innenraums 10 verringert sich von der Eintrittsöffnung 12 in Richtung der Förderrichtung 14 hin zur Austrittsöffnung 13. Die maximale Fläche des Querschnitts 17 ist durch die Fläche der Eintrittsöffnung 12 definiert, sie beträgt im Wesentlichen L · B. Die minimale Fläche des Querschnitts 17 entspricht der Fläche der Austrittsöffnung 13, sie beträgt im Wesentlichen 1 · b.

Wie die Eintrittsöffnung 12 und die Austrittsöffnung 13 ist der Querschnitt 17 des Innenraums 10 im Wesentlichen rechteckig. Auch der Querschnitt 17 weist daher eine Haupterstreckung 18 auf. Die Orientierung der Haupterstreckung 18 gibt wiederum diejenige Richtung an, welche parallel zu der längeren Seitenlänge des Querschnitts ist. Senkrecht zu der Orientierung der Haupterstreckung 18 hat der Querschnitt 17 daher eine geringere Ausdehnung als in Richtung der Orientierung der Haupterstreckung 18. Da die Orientierungen der Haupterstreckung 15 der Eintrittsöffnung 12 und der Haupterstreckung 16 der Austrittsöffnung 13 senkrecht aufeinander stehen, ändert sich die Orientierung der Haupterstreckung 18 des Innenraums 10 entlang der Förderrichtung 14. Bei dem hier gezeigten Ausführungsbeispiel dreht sich die Orientierung der Haupterstreckung 18 entlang der Förderrichtung um 90°.

Wie insbesondere in Fig. 5 zu sehen ist, variiert eine Breite des Querschnitts 17 des Innenraums 10 in Querrichtung y über die gesamte Höhe des Schüttguttrichters 5 in der Förderrichtung 14 um weniger als 5%. Die Breite des Querschnitts 17 in Querrichtung y ist im Wesentlichen konstant und gleich der Breite B der Eintrittsöffnung 12. Zur Verjüngung der Fläche des Querschnitts 17 abhängig von der Position entlang der Förderrichtung 14 wird die Ausdehnung des Querschnitts 17 entlang der Förderrichtung 14 kontinuierlich verringert (vgl. insbesondere Fig. 2 bis 4). Für alle Positionen entlang der Förderrichtung 14, für welche die Ausdehnung des Querschnitts 17 in Längsrichtung x größer als die Breite B ist, verläuft die Orientierung der Haupterstreckung 18 parallel zur Längsrichtung x. Eine derartige Orientierung der Haupterstreckung 18 ist in den Fig. 2 bis 5 eingezeichnet. Für alle Positionen entlang der Förderrichtung 14, für welche die Ausdehnung des Querschnitts 17 in Längsrichtung x kleiner als die Breite B ist, verläuft die Haupterstreckung 18 des Querschnitts 17 in Querrichtung 14. Die Orientierung der Haupterstreckung 18 wird daher an derjenigen Position entlang der Förderrichtung 14 gedreht, an welcher die Ausdehnung des Querschnitts 17 in Längsrichtung x die Breite B der Eintrittsöffnung unterschreitet.

Der Schüttguttrichter 5 weist einen Eintrittsabschnitt 19 und einen Austrittsabschnitt 20 auf. Der Eintrittsabschnitt 19 erstreckt sich von der Eintrittsöffnung 12 über die Hälfte der Höhe des Schüttguttrichters 5 in Förderrichtung 14. Der Austrittsabschnitt 20 schließt sich in der Förderrichtung 14 an den Eintrittsabschnitt 19 an und erstreckt sich bis zur Austrittsöffnung 13. In der aus Förderrichtung 14 und Längsrichtung x gebildeten Schnittfläche, welche in den Fig. 2 bis 4 dargestellt ist, weist der Eintrittsabschnitt 19 die Form eines regelmäßigen, sich in der Förderrichtung 14 verjüngenden Trapezes auf. Der Austrittsabschnitt 20 hat in dieser Schnittebene die Form eines unregelmäßigen, rechtwinkligen Trapezes. In dem Eintrittsabschnitt 19 sind an den beiden bezüglich der Längsrichtung x definierten Stirnwänden 24 des Gehäuses 11 zu der Förderrichtung 14 geneigt verlaufende Prallflächen 22, 23 ausgebildet. Die Prallflächen 22, 23 sind in dem Eintrittsabschnitt 19 zu einer Spiegelebene 21 spiegelsymmetrisch. Die Spiegelebene 21 verläuft parallel zu der Querrichtung y durch den bezüglich der Längsrichtung x gemessenen Mittelpunkt der Eintrittsöffnung 12. Die Spiegelebene 12 läuft durch einen Flächenschwerpunkt der Eintrittsöffnung 12. Diese Symmetrie ist im Bereich des Austrittsabschnitts 20 gebrochen. Während die einer der Stirnwände 24 zugeordnete Prallfläche 22 sich auch im Bereich des Austrittsabschnitts 20 erstreckt, endet die Prallfläche 23 am Übergang zwischen dem Eintrittsabschnitt 19 zum Austrittsabschnitt 20. Eine sich in dem Austrittsabschnitt 20 an die Prallfläche 23 anschließende Stirnwand 24 des Gehäuses 11 verläuft parallel zu der Förderrichtung 14. Dieser Symmetriebruch führt unter anderem dazu, dass ein Flächenschwerpunkt der Austrittsöffnung 13 entlang der Längsrichtung x gegenüber dem Flächenschwerpunkt der Eintrittsöffnung verschoben ist (vgl. Fig. 5). Der Flächenschwerpunkt der Austrittsöffnung 13 ist um etwa 10 % der Länge L der Eintrittsöffnung 12 entlang der Längsrichtung x gegenüber dem Flächenschwerpunkt der Eintrittsöffnung 12 verschoben.

Die Geometrie des Schüttguttrichters 5 weist eine Vielzahl von asymmetrischen Elementen auf, wie das Verhältnis der Länge L zu der Breite B der Eintrittsöffnung 12, das Verhältnis der Länge 1 zu der Breite b der Austrittsöffnung 13, die senkrecht zueinander verlaufenden Orientierungen der Haupterstreckung 15 der Eintrittsöffnung 12 und der Haupterstreckung 16 der Austrittsöffnung 13, das Drehen der Haupterstreckung 18 des Querschnitts 17 des Innenraums 10 und den Symmetriebruch zwischen Eintrittsabschnitt 19 und Austrittsabschnitt 20. Der Strömungsverlauf eines durch den Schüttguttrichter 5 strömenden Schüttguts muss sich an diese asymmetrischen Elemente der Geometrie des Schüttguttrichters 5 anpassen. So muss sich der Schüttgutstrom insbesondere an die sich abhängig von einer Position entlang der Förderrichtung 14 ändernde Haupterstreckung 18 anpassen. Dies bewirkt eine Kreuzung des Schüttgutstroms und damit eine Durchmischung des Schüttguts. Ähnlich wirkt sich der Symmetriebruch zwischen dem Eintrittsabschnitt 19 und dem Austrittsabschnitt 20 aus, wobei ein entlang der Prallfläche 22 verlaufender Anteil des Schüttgutstroms mit einem von der Prallfläche 23 umgelenkten Schüttgutstroms gekreuzt wird. Die Kreuzung und das damit einhergehende Durchmischen des Schüttgutstroms vermeidet eine Segregation des Schüttguts effektiv und zuverlässig.

Das Gehäuse 11 besteht aus einem verschleißfesten Material. Entlang von Kanten zwischen den Prallflächen 22, 23 und seitlichen Gehäusewänden sind Eckleisten 25 aus verschleißfestem Material angeordnet. Die Eckleisten 25 sind um 45° gegenüber den Prallflächen 22, 23 angestellt. Sie verhindern das Anbacken von Schüttgut.
Im Folgenden wird nun die Schüttgutweiche 6, welche das Schüttgut im Anschluss an den Schüttguttrichter 5 durchströmt, beschrieben. Die Schüttgutweiche 6 weist einen Einlass 26 für das Schüttgut auf (vgl. Fig. 1 und 2). Der Einlass 26 der Schüttgutweiche 6 ist in Förderrichtung 14 im Anschluss an die Austrittsöffnung 13 des Schüttguttrichters 5 angeordnet. Ein Querschnitt des Einlasses 26 ist derart gewählt, dass er mit der Austrittsöffnung 13 der Schüttgutweiche 6 korrespondiert. Die Querschnittsfläche des Einlasses 26 deckt die Austrittsöffnung 13 des Schüttguttrichters 5 vollständig ab. Der Einlass 26 ist im Wesentlichen durch die Austrittsöffnung 13 des Schüttguttrichters 5 definiert.

Zur Beschickung der verschiedenen Schüttgut-Container 2, 3, 4 weist die Schüttgutweiche 6 einen ersten Auslass 27 und zwei weitere Auslässe 28, 29 auf. Der erste Auslass 27 ist dem Schüttgut-Container 3 zugeordnet und befindet sich in Bezug auf die Längsrichtung x zwischen den weiteren Auslässen 28, 29. Der erste Auslass 27 wird daher im Folgenden auch als mittiger Auslass 27 bezeichnet. Der weitere Auslass 28 ist in den Figuren bezogen auf die Längsrichtung x links des mittigen Auslasses 27 dargestellt. Der weitere Auslass 28 wird daher im Folgenden auch als linker Auslass 28 bezeichnet. Der linke Auslass 28 ist dem Schüttgut-Container 2 zugeordnet. Der weitere Auslass 29 ist in den Figuren bezogen auf die Längsrichtung x rechts des mittigen Auslasses 27 angeordnet und wird im Folgenden auch als rechter Auslass 29 bezeichnet. Der rechte Auslass 29 ist dem Schüttgut-Container 4 zugeordnet.

Zwischen dem Einlass 26 und dem mittigen Auslass 27 ist ein Schüttvolumen 30 definiert (vgl. Fig. 1 und 2). Das Schüttvolumen 30 verbindet den Einlass 26 mit dem mittigen Auslass 27 entlang einer Schüttrichtung 31. Das Schüttvolumen 30 wird hierbei durch die Querschnittsfläche des Einlasses 26 und den Abstand zwischen Einlass 26 und mittigen Auslass 27 entlang der Schüttrichtung 31 aufgespannt. Die Schüttrichtung 31 ist die kürzeste Verbindung vom Einlass 26 zum mittigen Auslass 27. Die Schüttrichtung 31 steht senkrecht auf der Querschnittsfläche des Einlasses 26 und verläuft parallel zu der Schwerkraftrichtung 9 und damit auch parallel zu der Förderrichtung 14. Die Ausdehnung des Schüttvolumens 30 entlang der Schüttrichtung 31 entspricht daher einer Fallhöhe für das Schüttgut vom Einlass 26 zum mittigen Auslass 27.

Je weiteren Auslass 28, 29 ist eine Schüttgutrutsche 32, 33 vorhanden. Die Schüttgutrutsche 32 ist dem linken Auslass 28 und die Schüttgutrutsche 33 dem rechten Auslass 29 zugeordnet. Die Schüttgutrutschen 32, 33 sind einander entlang der Längsrichtung x bezogen auf das Schüttvolumen 30 gegenüberliegend angeordnet.

Die Schüttgutrutschen 32, 33 weisen jeweils ein Rutschen-Rohr 34 auf. Die jeweiligen Rutschen-Rohre 34 weisen jeweils ein Rutschen-Gehäuse 35 auf, welches einen schiefen Hohlzylinder bildet. Der Hohlzylinder des Rutschen-Gehäuses 35 weist eine quadratische Grundfläche auf. Jedes Rutschen-Rohr 34 weist an einem in Bezug auf die Schüttrichtung 31 oberen Ende einen Rohr-Einlass 41 auf. Der Querschnitt des Rohr-Einlasses 41 entspricht dem Querschnitt der Grundfläche des Rutschen-Rohrs 34. Der senkrecht zu der Schüttrichtung 31 definierte Innenquerschnitt der Rutschen-Rohre 34 und der Querschnitt der Rohr-Einlässe 41 entsprechen jeweils dem Querschnitt des Einlasses 26 in Kontur und Fläche. Der Querschnitt jedes Rohr-Einlasses 41 ist daher auch dazu geeignet, mit der Austrittsöffnung 13 des Schüttguttrichters 5 zu korrespondieren.

Die Schüttgutrutschen 32, 33 weisen jeweils ein Wandblech 36 auf. Die Wandbleche 36 verlaufen jeweils in einer aus der Querrichtung y und der Schüttrichtung 31 gebildeten Ebene. Die Schüttgutrutsche 33 weist zudem zwei Deckbleche 37 auf. Die Deckblecke 37 sind bezogen auf die Querrichtung y an den Seiten des Wandblechs 36 der Schüttgutrutsche 33 angeordnet und erstrecken sich von dem Wandblech 36 entlang der Längsrichtung x in Richtung der gegenüberliegenden Schüttgutrutsche 32. Die Deckbleche 37 sind in Querrichtung y um eine in Querrichtung y gemessene Ausdehnung des Schüttvolumens 30 beabstandet. Da das Schüttvolumen 30 die Austrittsöffnung 13 des Schüttguttrichters 5 vollständig überdeckt, sind die Deckblecke 37 daher zumindest um die Breite b der Austrittsöffnung 13 in Querrichtung y beabstandet.

Die Schüttgutrutschen 32, 33 sind jeweils unabhängig voneinander von einer jeweiligen Passivstellung in eine jeweilige Aktivstellung verlagerbar. Hierzu sind die Schüttgutrutschen 32, 33 auf einer gemeinsamen Schiene 38 angeordnet. Die Schiene 38 verläuft in Längsrichtung x. Die Längsrichtung x stellt eine Verlagerrichtung für die Verlagerung der Schüttgutrutschen 32, 33 dar. Die Schüttgutrutschen 32, 33 sind daher entlang der Längsrichtung x, das heißt senkrecht zu der Schüttrichtung 31, verlagerbar. Zur Verlagerung der Schüttgutrutschen 32, 33 ist jeweils eine Antriebseinheit 39 vorhanden. Die Antriebseinheiten 39 umfassen jeweils einen Teleskopzylinder 40 mit einem Linearantrieb. Durch Ein- und Ausfahren der Teleskopzylinder 40 werden die Schüttgutrutschen 32, 33 entlang der Schienen 38 verfahren. Zum Antrieb der Teleskopzylinder kann ein nicht dargestellter Elektromotor vorgesehen sein. Alternativ können die Teleskopzylinder als Hydraulik- oder Pneumatikzylinder ausgeführt sein. Weitere Komponenten, wie Druckluftleitungen oder Stromführungen hin zu den Teleskopzylindern 40, sind der Einfachheit halber in den Figuren nicht dargestellt.

Die Deckbleche 37 der Schüttgutrutsche 33 sind derart in Querrichtung zueinander beabstandet, dass die Schüttgutrutsche 32 zwischen den Deckblechen 37 Platz findet. Beim Verlagern der Schüttgutrutsche 32 oder der Schüttgutrutsche 33 dienen die Deckbleche 37 der Schüttgutrutsche 33 als Führungselemente, an welchem die jeweilige geführte Schüttgutrutsche geführt wird.

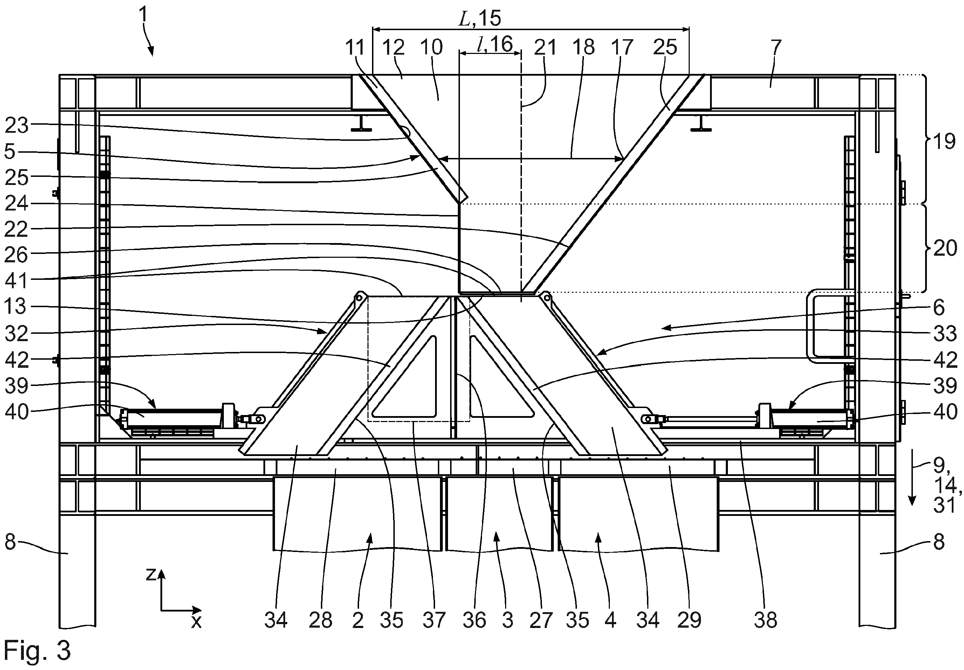

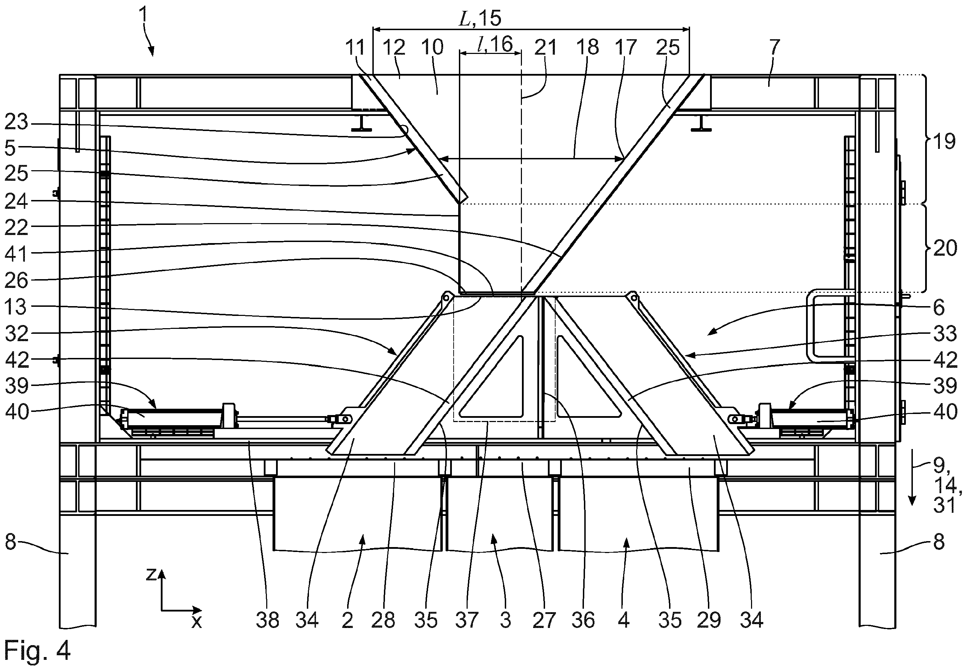

Durch das Ein- bzw. Ausfahren der Teleskopzylinder 40 der Antriebseinheiten 39 wird die jeweiligen Schüttgutrutsche 32, 33 entlang der Schienen 38 zwischen ihrer Passivstellung und ihrer Aktivstellung verlagert. In den Fig. 1, 2 und 3 ist die Schüttgutrutsche 32 in ihrer Passivstellung gezeigt. In Fig. 4 und 5 ist die Schüttgutrutsche 32 in ihrer Aktivstellung gezeigt. Die Schüttgutrutsche 33 ist in den Fig. 1, 2, 4 und 5 in ihrer Passivstellung und in der Fig. 3 in ihrer Aktivstellung dargestellt. In der jeweiligen Passivstellung geben die Schüttgutrutschen 32, 33 das Schüttvolumen 30 frei. In der Aktivstellung ragt die jeweilige Schüttgutrutsche 32, 33 in das Schüttvolumen 30 hinein und erstreckt sich bis zum jeweiligen weiteren Auslass 28, 29. Dies wird im Folgenden näher erläutert:
In den Fig. 1 und 2 sind beide Schüttgutrutschen 32, 33 in der jeweiligen Passivstellung gezeigt. In der jeweiligen Passivstellung der Schüttgutrutschen 32, 33 sind die Teleskopzylinder 40 eingefahren und die Schüttgutrutschen 32, 33 in der Längsrichtung x direkt benachbart zu den Schüttvolumen 30 angeordnet. Die Schüttgutrutschen 32, 33 ragen nicht in das Schüttvolumen 30 hinein, sondern geben dieses frei. Das Schüttvolumen 30 ist in Längsrichtung x beidseitig durch die Wandbleche 36 der Schüttgutrutschen 32, 33 begrenzt. In Querrichtung y ist das Schüttvolumen 30 durch die Deckbleche 37 der Schüttgutrutsche 33 begrenzt. In dieser Konfiguration wird durch die Austrittsöffnung 13 des Schüttguttrichters 5 strömendes Schüttgut über den Einlass 26 durch das Schüttvolumen 30 in Schüttrichtung 31 zum mittigen Auslass 27 geleitet und gelangt von dort in den mittigen Schüttgut-Container 3. In der Passivstellung beider Schüttgutrutschen 32, 33 wird der Schüttgut-Container 3 beschickt. Das Schüttgut kann hierbei nicht zur Seite entweichen, da das Schüttvolumen 30 durch die Wandbleche 36 und die Deckbleche 37 eingefasst ist.

In der jeweiligen Passivstellung überdecken die Schüttgutrutschen 32, 33 einen Querschnitt des jeweiligen weiteren Auslasses 28, 29 vollständig. Die Schüttgutrutschen 32, 33 bilden ein Dach über dem jeweiligen weiteren Auslass. Schüttgut kann nicht unbeabsichtigt von oben in den jeweiligen Auslass fallen.

In Fig. 3 ist die Schüttgutrutsche 32 in ihrer Passivstellung, die Schüttgutrutsche 33 in ihrer Aktivstellung gezeigt. Hierbei ist der Teleskopzylinder 40 der Antriebseinheit 39 der Schüttgutrutsche 33 teleskopiert. Die Schüttgutrutsche 33 ist in Längsrichtung x derart verlagert, dass die Schüttgutrutsche 33 in das Schüttvolumen 30 hineinragt. Der Rohr-Einlass 41 des Rutschen-Rohrs 34 der Schüttgutrutsche 33 deckt den Einlass 26 und damit den senkrecht zu der Schüttrichtung 31 definierten Querschnitt des Schüttvolumens 30 vollständig ab. Durch die Schüttgutrutsche 33 stellt die kürzeste Verbindung zwischen dem Einlass 26 und dem rechten Auslass 29 dar. Ein durch die Austrittsöffnung 13 des Schüttguttrichters 5 strömendes Schüttgut wird durch das Rutschen-Rohr 34 der Schüttgutrutsche 33 zum rechten Auslass 29 geführt und gelangt von dort in den rechten Schüttgut-Container 4. In der Aktivstellung der Schüttgutrutsche 33 wird der Schüttgut-Container 4 beschickt.

In den Fig. 4 und 5 ist die Schüttgutrutsche 32 in ihrer Aktivstellung, die Schüttgutrutsche 33 in ihrer Passivstellung gezeigt. Der Teleskopzylinder 40 der der Schüttgutrutsche 32 zugeordneten Antriebseinheit 39 ist teleskopiert. Die Schüttgutrutsche 32 ragt in das Schüttvolumen 30 hinein. Der Rohr-Einlass 41 des Rutschen-Rohrs 34 der Schüttgutrutsche 32 deckt den senkrecht zu der Schüttrichtung 31 definierten Querschnitt des Schüttvolumens 30 vollständig ab. Durch das Rutschen-Rohr 34 der Schüttgutrutsche 32 wird eine direkte Verbindung zwischen dem Einlass 26 und dem linken Auslass 28 für das Schüttgut bereitgestellt. Ein durch die Austrittsöffnung 13 des Schüttguttrichters 5 strömendes Schüttgut wird durch den Rohr-Einlass 41 entlang des Rutschen-Rohrs 34 der Schüttgutrutsche 32 zum linken Auslass 28 geleitet und gelangt von dort in den linken Schüttgut-Container 2. In der Aktivstellung der Schüttgutrutsche 32 wird der Schüttgut-Container 2 beschickt.

Die Rutschen-Gehäuse 35 sind wie das Gehäuse 11 aus einem verschleißfesten Material. Zudem sind seitlich an der Rutschfläche um 45° angestellte Eckleisten 42 aus verschleißfestem Material vorgesehen. Diese verhindern ein Anbacken des Schüttguts in den Rutschen-Rohren 34.

## Patentansprüche

1. Schüttguttrichter für eine Schüttgut-Beschickungsanlage mit einem einen Innenraum (10) begrenzenden Gehäuse (11), das
- eine Eintrittsöffnung (12) für ein Schüttgut und
- eine in einer Förderrichtung (14) von der Eintrittsöffnung (12) beabstandet angeordnete Austrittsöffnung (13) für das Schüttgut aufweist,
wobei ein senkrecht zu der Förderrichtung (14) definierter Querschnitt (17) des Innenraums (10) eine Haupterstreckung (15, 16, 18) senkrecht zu der Förderrichtung (14) hat, wobei sich eine Orientierung der Haupterstreckung (18) in Abhängigkeit von einer Position entlang der Förderrichtung (14) ändert.

2. Schüttguttrichter nach Anspruch 1, **dadurch gekennzeichnet, dass** sich die Orientierung der Haupterstreckung (15, 16, 18) des Querschnitts (17) entlang der Förderrichtung (14) sich um mindestens 30°, insbesondere um mindestens 45°, insbesondere um mindestens 60°, insbesondere um mindestens 75°, insbesondere um mindestens 85°, bevorzugt um etwa 90° dreht.

3. Schüttguttrichter nach einem der vorgenannten Ansprüche, **dadurch gekennzeichnet, dass** eine Orientierung einer Haupterstreckung (15) der Eintrittsöffnung (12) zu einer Orientierung einer Haupterstreckung (16) der Austrittsöffnung (13) einen Winkel zwischen 80° und 100°, bevorzugt von etwa 90°, aufweist.

4. Schüttguttrichter nach einem der vorgenannten Ansprüche, **dadurch gekennzeichnet, dass** die Eintrittsöffnung (12) und/oder die Austrittsöffnung (13) einen im Wesentlichen rechteckigen Querschnitt aufweisen.

5. Schüttguttrichter nach einem der vorgenannten Ansprüche, **dadurch gekennzeichnet, dass** eine Längsrichtung (x) des Schüttguttrichters (5) entlang einer Orientierung der Haupterstreckung (15) der Eintrittsöffnung (12) und eine senkrecht zu der Längsrichtung (x) und senkrecht zu der Förderrichtung (14) verlaufende Querrichtung (z) des Schüttguttrichters (5) definiert sind, wobei eine entlang der Längsrichtung (x) gemessene Länge (L) der Eintrittsöffnung (12) mindestens um den Faktor 1,5, insbesondere mindestens um den Faktor 2, länger ist als eine in der Querrichtung (y) gemessene Breite (B) der Eintrittsöffnung (12).

6. Schüttguttrichter nach Anspruch 5, **dadurch gekennzeichnet, dass** eine Breite des Querschnitts des Innenraums (10) in der Querrichtung (y) entlang der Förderrichtung (14) höchstens um 10 %, insbesondere höchstens um 5 %, variiert.

7. Schüttguttrichter nach einem der vorgenannten Ansprüche, **dadurch gekennzeichnet, dass** ein Flächenschwerpunkt der Eintrittsöffnung (12) gegenüber einem Flächenschwerpunkt der Austrittsöffnung (13) senkrecht zu der Förderrichtung (14) verschoben ist.

8. Schüttguttrichter nach einem der vorgenannten Ansprüche, **dadurch gekennzeichnet, dass** das Gehäuse (11) einen sich in Förderrichtung (14) zur Austrittsöffnung (13) hin erstreckenden Austrittsabschnitt (20) aufweist, wobei der Austrittsabschnitt (20) in einer entlang der Förderrichtung (14) definierten Schnittebene die Form eines sich in Förderrichtung (14) verjüngenden unregelmäßigen Trapezes aufweist.

9. Schüttguttrichter nach einem der vorgenannten Ansprüche, **dadurch gekennzeichnet, dass** das Gehäuse (11) entlang von dem Innenraum (10) zugewandten Kanten zumindest bereichsweise Eckleisten (25) aufweist.

10. Schüttgut-Beschickungsanlage mit einem Schüttguttrichter nach einem der Ansprüche 1 bis 9.
